# EUROPÄISCHE PATENTSCHRIFT

(11) **EP 1 051 563 B1**
(45) Veröffentlichungstag und Bekanntmachung des Hinweises auf die Patenterteilung: **04.09.2002**
(21) Anmeldenummer: 99903614.8
(22) Anmeldetag: 09.01.1999
(51) Int. Cl.: F01N 3/28

(54) **LAGERUNG ZUR HALTERUNG UND ISOLATION VON KERAMIKMONOLITHEN IN EINER KRAFTFAHRZEUG-ABGASANLAGE**
BEDDING FOR MOUNTING AND INSULATING CERAMIC MONOLITHS IN AN AUTOMOBILE EXHAUST SYSTEM
LOGEMENT POUR MAINTENIR ET ISOLER DES MONOLITHES CERAMIQUES DANS UN SYSTEME DE GAZ D'ECHAPPEMENT D'AUTOMOBILE

(30) Priorität: 28.01.1998 DE 19803063
(43) Veröffentlichungstag der Anmeldung: 15.11.2000
(73) Patentinhaber: J. Eberspächer GmbH & Co., 73730 Esslingen (DE)
(72) Erfinder: WIRTH, Georg, D-73230 Kirchheim (DE); WÖRNER, Siegfried, D-73734 Esslingen (DE); ZACKE, Peter, D-73095 Albershausen (DE)
(86) Internationale Anmeldenummer: EP9900087
(87) Internationale Veröffentlichungsnummer: WO99039086

(56) Entgegenhaltungen:
- EP-A- 0 366 484
- EP-A- 0 551 532
- DE-A- 4 201 426
- DE-C- 4 305 198
- DE-U- 29 709 180

## Beschreibung

Die Erfindung betrifft eine Lagerung zur Halterung und Isolation von Keramikmonolithen in einer Kraftfahrzeug-Abgasanlage, mit einem einen vorzugsweise unrunden Querschnitt aufweisenden Gehäuse, und zumindest einem innenliegenden Keramikmonolith entsprechenden Querschnitts, wobei der Keramikmonolith mit einer Lagermatte umwickelt und im Gehäuse gelagert ist, wobei die Lagermatte als Einzelmatte oder mehrlagig zumindest aus zwei Lagen aufgebaut ist, und die Einzelmatte oder zumindest eine Lage der mehrlagigen Lagermatte in Umfangsrichtung eines Keramikmonolithen aus druckbeständigen Quellmattenabschnitten mit Blähglimmer und zwischengeordneten erosionsbeständigen Fasermattenabschnitten ohne Blähglimmer zusammengesetzt ist.

Zur Halterung und Isolation von Keramikmonolithen in Kraftfahrzeug-Abgasanlagen wird gegenwärtig hauptsächlich Quellmatte - ein Gemisch von Keramikfasern, Vermiculite-Glimmern und organischem Bindemittel - eingesetzt. Die Filzmatte wird um die Monolithe gewickelt und durch Einlegen und Schließen des Gehäuses (oder durch Einschieben in ein Rohr oder Umwickeln mit einem offenen Rohr und dessen Zuspannen und Schließen) in der Höhe bzw. Dicke verpreßt. Dadurch baut die Quellmatte eine Druckspannung gegen Monolith und Gehäuse auf und hält die Keramikmonolithe durch Reibung zwischen Monolith und Quellmatte einerseits sowie zwischen Gehäuse und Quellmatte andererseits bei Belastung durch Betriebskräfte (Druckverlust am Monolith, Beschleunigungskräfte am System) in der Abgasanlage fixiert. Bei Erhöhung der Temperatur im Betrieb steigen die Haltekräfte der Quellmatte durch thermisches Verspannen des Vermiculites gegen die Keramikfasern. Die Pressung der Quellmatte steigt mit der Temperatur, und damit auch die Reibung. Bei runden Katalysatoren mit gleichmäßigem, umlaufenden Spalt funktioniert dies sehr gut. Die Quellmatte stellt bei steigender Temperatur deutlich mehr nach, als das System durch Aufgehen des Gehäuserohres gegen den Monolith durch Wärmedehnung an Spannung verliert. Zur Ausnutzung der freien Querschnitte im Tunnel eines Fahrzeugbodens für möglichst große Monolithquerschnittsflächen (zwecks Minimierung des Druckverlusts) werden jedoch neben runden Monolithen auch geometrisch ungünstigere Formen wie Dreiecke, Polygone und flache Ovale - sogenannte Race-Track - verwendet.

Bei solchen Querschnittsformen reicht die Steifigkeit der Gehäuse bei der Montage oder auch im Betrieb in der Regel nicht aus, um einen konstanten Lagerspalt für die Quellmatte zu halten. In den größeren Radien oder in den flacheren Bereichen der Gehäuse tritt eine Auffederung bei der Montage und zusätzlich ein Aufgehen im Betrieb durch die erhöhte Pressung der Quellmatte unter Temperatur auf. Dies führt zu einer ungleichmäßigen Pressungsverteilung am Umfang. Die höchsten Pressungen und damit Haltekräfte entstehen in den kleinen Radien des Querschnittes, und an den großen Radien wachsen die Spalte. Mit wachsenden Spalten jedoch sinkt die Erosionsbeständigkeit der Quellmatte. Sie wird empfindlich gegen in die Quellmatte eindringende Gaspulsationen und gegen Vibrationen. Praktisch lösen sich bei geringen Quellmattendichten und sehr hohen Belastungen (Beschleunigungen, Pulsationen, Temperaturen, Temperaturwechselgeschwindigkeiten) die Glimmerkörner aus dem Verbund und zerschlagen danebenliegende Fasern. Sie schaffen sich kleine Hohlräume in der Matte, die im weiteren Betrieb immer größer werden und schließlich zum Ausräumen der Matte, zur Bildung eines ungereinigten Abgasbypass-Stromes um den Monolithen herum und letztlich zum Lösen des Monolithen mit Totalausfall des Systems führen.

Um vorgenanntem Problem grundsätzlich Rechnung zu tragen, wird gemäß DE 296 11 788 U1 vorgeschlagen, in den größeren Radien von ovalen Gehäusen und Monolithen erosionsbeständigere Matteneinsätze bei einer zusammengesetzten Matte zu verwenden, nämlich Saffil-Einsätze, während in den kleineren Radien vorgenanntes Quellmattenmaterial nach wie vor beibehalten wird. Um teures Saffil an weniger kritischen Stellen zu sparen, weist in axialer Mitte der Patchwork-Matte jeder Saffil-Einsatz Aussparungen bzw. Nuten auf, welche bündig Stoß an Stoß mit entsprechenden Vorsprüngen bzw. Federn von Quellmattenabschnitten verlaufen. Zusammengehalten werden die Einzelmattenabschnitte durch ein Klebeband. Von Nachteil hierbei ist der scharfkantige, rechtwinklige Schnitt der Nut-Feder-Verbindung an den Stößen, was nach wie vor mit Problemen einer Erosion an den herausstehenenden Quellmattenecken bzw. Federn einhergeht. Ferner treten Handhabungs- bzw. Montageschwierigkeiten auf, nämlich das Problem des Hängenbleibens von heraustehenden Ecken und des Umlegens dieser Ecken bei der Montage in einer Halbschale oder einem Rohrgehäuse. Weiterer Nachteil ist der große Verschnitt der teuren Saffil-Einsätze aus einer Basismatte entsprechenden Materials. Gleiches gilt im übrigen für den Verschnitt der Quellmattenabschnitte.

Ähnlich der Ausführungsform nach der vorgenannten DE 296 11 788 U1 ist aus DE 297 09 180 U eine Lagerung zur Halterung und Isolation von Keramikmonolithen der eingangs genannten Art bekannt, bei der in einem Gehäuse ein mit einer einoder mehrlagigen Lagermatte umwickelter Keramikmonolith gelagert ist. Zumindest eime Lage ist in Umfangsrichtung des Keramikmonolithen aus druckbestängigen Quellmattenabschnitten mit Blähglimmer und zwischengeordneten erosionsbeständigen Fasermattenabschnitten ohne Blähglimmer zusammengesetzt.

Ausgehend vom vorgenannten Stand der Technik ist es Aufgabe der Erfindung, ein Lagerung zur Halterung und Isolation von Keramikmonolithen in einem Gehäuse einer Abgasanlage eines Kraftfahrzeuges der eingangs genannten Art zu schaffen, welche mit Hilfe einfacher Maßnahmen Erosionen an definierten Stellen im Betrieb einer Abgasanlage zuverlässig vermeidet oder zumindest minimiert.

Gelöst wird die Aufgabe durch eine Lagerung der im Anspruch 1 angegebenen Art.

Vorteilhafte Weiterbildungen der Lagerung ergeben sich aus den Merkmalen der abhängigen Ansprüche 2 bis 19.

Wesen des Erfindung ist, daß die Verbindungsränder zwischen den Quellmattenabschnitten und Fasermattenabschnitten einen ineinander kämmenden Stoß in Wellenform besitzen, wobei insbesondere die erosionsbeständigen Fasermattenabschnitte wellenförmigen Zungen und die druckbeständigen Quellmattenabschnitte wellenförmigen Ausschnitte besitzen.

Der vorgenannte wellenförmige Schnitt ist eine hier neu vorgestellte Form eines Zuschnittes und unterscheidet sich wesentlich von der scharfkantigen, rechtwinkligen bisherigen Zuschnittsart beispielsweise gemäß DE 296 11 788 U1 oder DE 297 09 180 U. Da für dauerhafte Systeme gefordert ist, daß der Stoß am Umfang geschlossen ist, wird die Mattenlänge so gewählt, daß sie über den Umfang hinausragt (ca. 3 mm) und dadurch bei der Montage axial am Stoß zusammengestaucht wird. Eine wellenförmige Verzahnung ist wesentlich prozeßsicherer als eine scharfkantige Nut-Feder-Verbindung, da sie sich besser ineinanderfügt, ein Abbrechen der bröseligen Mattenenden nicht mehr erfolgt und auch ein Aufhängen überstehender Spitzen beim Schließen der Halbschalen oder beim Einschieben in ein Mantelrohr mit nachfolgender Verschiebung und Doppelung der Matte an diesen Stellen nicht mehr stattfindet. Die Form der wellenförmigen Verzahnung wird so gewählt, daß die Radien der einzelnen Zuschnitte ineinandergreifen und die Matten so ohne Verschnitt aneinanderliegend aus dem bahnförmigen Rohmatrial geschnitten werden können (Messerschnitte).

Eine spezielle Lagerung zumindest eines Keramikmonolithen in einem vorzugsweise unrunden (beispielsweise ovalen oder dreieckigen) Gehäuse (Rohr oder Halbschalen) einer Kraftfahrzeug-Abgasanlage unter Verwendung einer Lagermatte, welche zumindest eine Quellmatte aufweist, sieht insbesondere als Lagermatte eine mehrlagige, auf die Funktion im Betrieb der Abgasanlage abstellte Matte vor, wobei innen und außen unterschiedliche Quellmatten (mit Blähglimmer) und/oder Fasermatten (ohne Blähglimmer bzw. ohne körnige Bestandteile) vorgesehen sein können.

Als innere vorzugsweise dem Gehäuse zugewandte Lage der Lagermatte kann eine Matte aus Keramikfasergewebe vorgesehen sein.

In oder an der Einzelmatte können örtliche erosionsminimierende Materialverstärkungen ein- oder angebracht werden, wobei die Einzelmatte an der Stelle der Ein- oder Anbringung der Materialverstärkungen Einbuchtungen oder Durchbrüche aufweisen kann, welche formschlüssig mit den Materialverstärkungen zusammenpassen, so daß im eingebauten bzw. eingesetzten Zustand der Materialverstärkungen eine plane Oberseite entsteht und dadurch ein Dicken- und Pressungsausgleich hergestellt wird.

Die Einzelmatte kann dem Keramikmonolithen zugewandt sein.

Insbesondere wird eine Einzelmatte oder die Lagermatte vor einer Umwicklung um den Keramikmonolithen zumindest an den erosionsgefährdeten Stellen imprägniert, wobei die Imprägnierung auf der monolithzugewandten Mattenseite mit verdünnten, durch Netzmittel eindringfähig gemachten hitzebeständigen Klebern erfolgt, die zumindest einer der folgenden Produktgruppen zugeordnet sind:
- kolloidale Lösung von in Wasser gelöster Kieselsäure
- Wasserglas
- Alkalisiliconate wie z. B. Kaliummethylsiliconat
- Monoaluminiumphosphatlösung
- Aluminiumchromphosphatlösung.

Hierbei wird beim Imprägnieren der Kleber so weit verdünnt, daß sich nur an den Kontaktstellen zwischen den Fasern und gegebenenfalls zwischen den Fasern und dem Glimmer Bindemittel befindet.

Ergänzend oder alternativ kann auch die Lagermatte mit dem Keramikmonolith und/oder Gehäuse mit einem temperaturbeständigen Mattenkleber verklebt werden, wobei der Mattenkleber auf die Innenseite des Gehäuses und/oder auf den Keramikmonoith aufgetragen und die Lagermatte eingelegt und naß im Gehäuse montiert wird.

Ein verwendeter Mattenkleber ist insbesondere einer der oben angeführten Produktgruppen zugeordnet.

Vor oder bei der Montage der Abgasanlage werden bevorzugt die Haltekräfte zwischen Lagermatte und Gehäuse durch Formschluß, insbesondere durch Erhöhung der Oberflächenrauhigkeit, gezielt herbeigeführt.

Insbesondere erfolgt die Erhöhung der Oberflächenrauhigkeit durch Einarbeitung oder Einätzung rauher Flächen gegebenenfalls unter Verwendung eines Mattenbindemittels.

Eine vorkonfektionierte Phenolharzklebefolie kann an der Außenseite der Lagermatte angeordnet und zusammen mit der Lagermatte eingelegt werden und im Betrieb der Abgasanlage bei Erwärmung außen an der Innenseite des Gehäuses abbinden.

Besitzt die Lagermatte eine oder mehrere Fasermatten, so sind letztere bevorzugt scherstabil ausgebildet.

Eine scherstabile Fasermatte weist insbesondere schräge Filzfasern auf, welche unter einem flachen Winkel von 5° bis 60° von der Unter- zur Oberseite der Matte verlaufen und die Filzfaserenden an den Trennflächen bzw. an der Unter- und Oberseite der Matte verklebt sind.

Alternativ kann eine scherstabile Fasermatte auch Fasern besitzen, welche über die Mattendicke in Schlingen angeordnet sind, wobei die Schlingen an der Ober- und Unterseite der Matte anliegen und verklebt sind.

Als temperatur- und oxidationsbeständige Einzelmatten der Lagermatte finden vorzugsweise Faserfilze und/oder Gewebematten Verwendung, die zumindest eine der nachfolgenden Materialien bzw. Produktgruppen zugeordnet sind:
- geleachtes Glas
- Quarzglas
- Aluminiumoxid
- Mischungen aus Aluminium- und Siliziumoxid
- Anteile von Bor und/oder Zirkon

Zweckmäßigerweise wird als innere Abstützung der Lagermatte ein Drahtgewebe verwendet, welches vorzugsweise in Axialerstreckung der Lagerung schmaler geschnitten ist als der Rest der Lagermatte.

Bevorzugt finden bei Einzelmatten Fasern mit einer Dicke von 6 bis 12 Mikrometer Verwendung, um Gesundheitsgefahren durch die Lungengängigkeit zu kleiner Fasern und die Hautreizung mit zu dicken Fasern bei der Verarbeitung zu vermeiden.

Zusammenfassend sei erwähnt, daß bei einer Ausführungsform mit einer mehrlagigen Lagermatte die einzelnen Lagen auf die Funktion im Betrieb der Abgasanlage abgestimmt sind. Dann können beispielsweise innen und außen unterschiedliche Quellmatten und/oder Fasermatten vorgesehen sein. Je nachdem, welche Probleme auftreten, werden Matten mit hoher Elastizität, hohem Erosionswiderstand, Quellfähigkeit bei niedrigen Temperaturen, Quellfähigkeit bei hohen Temperaturen, Beständigkeit bei extrem hohen Temperaturen oder Bindern für bestimmte Temperaturen in der Ausdehunung der Matte (örtlich) und in der Tiefe der Matte (Innen-, Außen- oder Zwischenlage) kombiniert, um bei vertretbaren Kosten optimale Funktion zu erzielen.

Besonders zweckmäßig ist die Verklebung der Matten mit Monolith und Gehäuse im Betrieb durch geeignete Harzsysteme auf der Innen- und/oder Außenseite oder die Erhöhung der Reibung durch Präparieren der Oberfläche vor oder bei der Montage (Formschluß durch rauhe Flächen - eingearbeitete oder eingeätzte Rauhigkeit, eventuell mit Mattenbindemittel) zur Erhöhung und Stabilisierung der Monolithhaltekräfte.

Bedeutungsvoll ist ein zumindest wahlweises Imprägnieren der Quellmatten und Fasermatten zur weiteren Erhöhung der Erosionsbeständigkeit ohne wesentliche Verringerung der Elastizität.

Sind Fasermatten bei einer Lagermatte vorhanden, so weisen die Fasermatten eine hohe Scherstabilität auf, um Haltekräfte von den Übergangsflächen von Monolith zu Matte und von Blechmantel zur Matte übertragen zu können. Herkömmliche Fasermatten werden durch lagenweises Ablegen der Fasern und anschließendes Vernadeln oder Verkleben hergestellt. Dabei entstehen in der Mattenhöhe Trennflächen, über die die Matte auseinanderrutscht. Erfindungsgemäße Matten kennzeichnen sich durch geändertes Ablegen der Fasern und Binden der Matte. Die einzelnen Fasern verlaufen bevorzugt unter einem flachen Winkel von etwa 5° bis 60° von der Unter- zur Oberseite der Matte, um eine Verklebung der Faserenden an den Trennflächen optimal zu ermöglichen und trotzdem mittig ausreichende Elastizität einzurichten. Eine andere Möglichkeit zum Erhalt der Elastizität und Scherfestigkeit einer Fasermatte ist die Ausführung mit Schlingen, die an der Ober- und Unterseite anliegen.

Die Erfindung wird nachfolgend anhand von Ausführungsbeispielen unter Bezugnahme auf die beigefügte Zeichnung näher beschrieben; es zeigen:
- Fig. 1: eine erfindungsgemäß aufgebaute vierlagige Lagermatte für eine Halterung und Isolation von Keramikmonolithen in einem im Querschnitt ovalen Rohrgehäuse einer Kraftfahrzeug-Abgasanlage in planer bzw. nicht umwickelter schematischer perspektivischer Darstellung,
- Fig. 2: die in das ovale Rohrgehäuse einzubringenden beiden ovalen Keramikmonolithen in perspektivischer Darstellung,
- Fig. 3: die Lagermatte nach Fig. 1 in einer perspektivischen Explosionsdarstellung,
- Fig. 4: eine erfindungsgemäß aufgebaute zweilagige Lagermatte in einer Darstellung ähnlich Fig. 1,
- Fig. 5: die Lagermatte nach Fig. 4 in einer perspektivischen Explosionsdarstellung ähnlich Fig. 3,
- Fig. 6: eine erfindungsgemäß aufgebaute dreilagige Lagermatte ähnlich den Fig. 1 und 4,
- Fig. 7: die Lagermatte nach Fig. 6 in einer perspektivischen Explosionsdarstellung ähnlich den Fig. 3 und 5,
- Fig. 8: eine andere zweilagige Lagermatte in einer Darstellung ähnlich Fig. 1,
- Fig. 9: die zweilagige Lagermatte nach Fig. 8 in einer Explosionsdarstellung,
- Fig. 10: eine weitere dreilagige Lagermatte ähnlich Fig. 6,
- Fig. 11: die Lagermatte nach Fig. 10 in einer Explosionsdarstellung,
- Fig. 12: ein Rohrgehäuse in schematischer perspektivischer Ansicht mit innen aufgerauhter Oberfläche,
- Fig. 13: eine andere mehrlagige Lagermatte in einer Darstellung ähnlich Fig. 1,
- Fig. 14: das Rohmaterial einer Fasermatte unmittelbar nach einem wellenförmigen Schnitt zwecks Darstellung des Zuschnitts ohne Materialverschnitt,
- Fig. 15: eine mehrlagige Lagermatte schematisch im Schnitt,
- Fig. 16: das ovale Rohrgehäuse im Querschnitt mit montierter mehrlagiger Lagermatte gemäß Fig. 13 und Keramikmonolith nach Fig. 2.
- Fig. 17: eine andere zweite Lage einer Lagermatte nach Fig. 7 schematisch in einer Teildraufsicht, wobei entsprechend Fig. 14 die Zuschnittanordnung mit geringem Verschnitt dargestellt ist, und
- Fig. 18: eine erfindungsgemäße Abgasanlage in einem schematischen Axialschnitt, wobei oberhalb der Axialmittellinie eine Lagermatte für zwei Keramikmonlithen in einem ovalen Rohrgehäuse mit schrägen endseitig verklebten Filzfasern und unterhalb der Axialmittellinie eine Lagermatte mit Fasern in Schlingenform dargestellt ist.

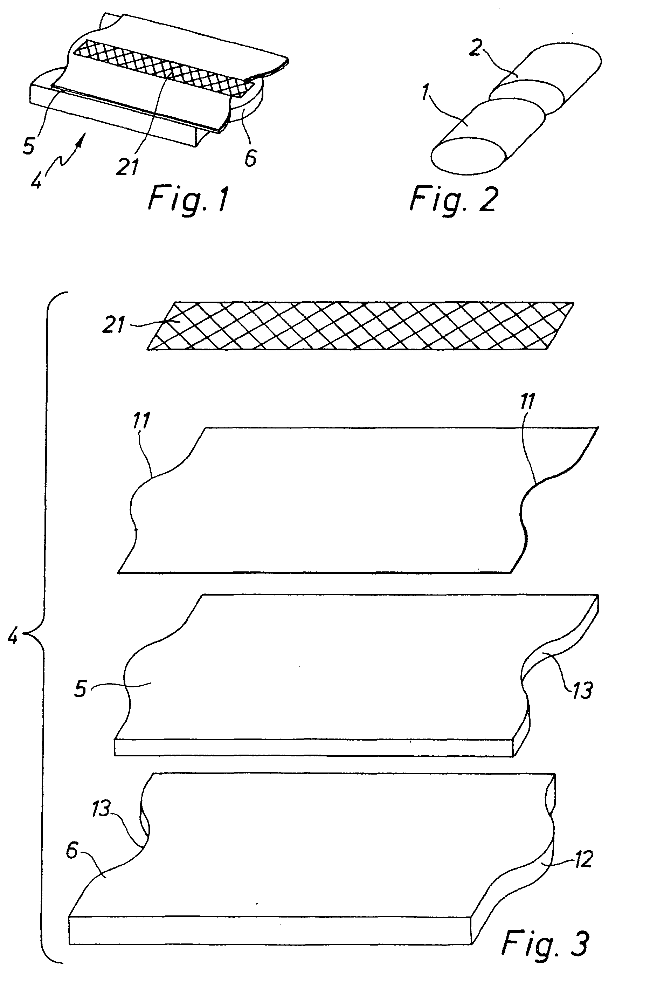

Gemäß Zeichnung umfaßt eine Lagerung zur Halterung und Isolation von zwei hintereinander angeordneten, im Querschnitt ovalen Keramikmonolithen 1, 2 gemäß Figur 2 in einem entsprechend ovalen Rohrgehäuse 3 einer Kraftfahrzeug-Abgasanlage eine Lagermatte 4.

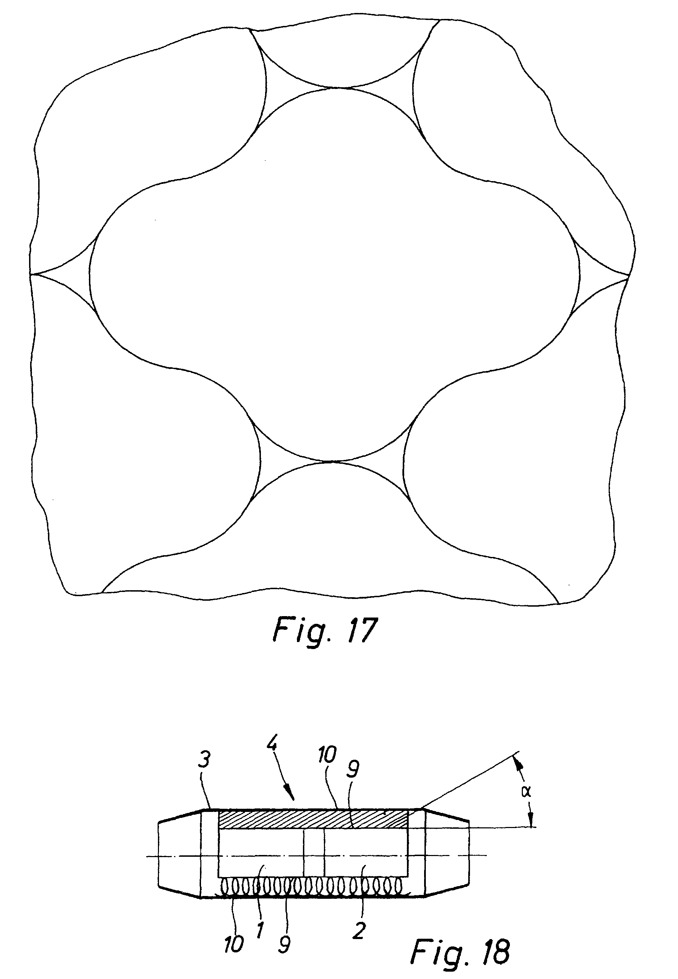

Die Lagermatte 4 ist, wie dies prinzipiell in Figur 18 dargestellt ist, um die beiden Keramikmonolithen 1, 2 gewickelt und haltert entsprechend die Keramikmonolithen 1, 2 im Rohrgehäuse 3.

Die Lagermatte 4 und/oder das Rohrgehäuse 3 ist/sind zumindest an den Stellen einer Erosionsgefährdung A einer montierten Lagermatte im Betrieb der Kraftfahrzeug-Abgasanlage bzw. an den Stellen eines aufgetretenen Schadensbildes in besonderer Weise aufgebaut und/oder chemisch besonders behandelt, wie nachfolgend im einzelnen beschrieben wird.

Insbesondere mit Bezug auf die Figuren 1 bis 17 ist die Lagermatte 4 mehrlagig zumindest aus zwei Lagen aufgebaut, wobei die einzelnen Lagen entsprechend der Funktion der Lage im Betrieb materialmäßig ausgewählt und gegebenenfalls in der Konfiguration zugeschnitten und/oder materialmäßig verstärkt werden.

Es finden als temperatur- und oxidationsbeständige Einzellagen bzw. Einzelmatten der Lagermatte 4 Faserfilze und/oder Gewebematten Verwendung, die zumindest eine der nachfolgenden Materialien bzw. Produktgruppen zugeordnet sind:
- geleachtes Glas
- Quarzglas
- Aluminiumoxid
- Mischungen aus Aluminium- und Siliziumoxid
- Anteile von Bor und/oder Zirkon

Auch Keramikfasergewebe werden als Einzellagen eingesetzt, sowie Quellmatten, welche eine Gemisch von Keramikfasern, Bläh-Glimmer und organischen Bindemittel sind.

Zur Abstützung können Drahtgewebe 21 oder Keramikgewebe verwendet werden, welche in Axialerstreckung der Lagerung schmaler geschnitten sind als der Rest der Lagermatte 4.

In oder an der Einzellage können örtlich als Erosionsschutz Materialverstärkungen 22, 23 ein- oder angebracht werden, wobei die Einzelmatte an der Stelle der Ein- oder Anbringung der Materialverstärkungen 22, 23 Einbuchtungen oder Durchbrüche 24 aufweisen kann, welche formschlüssig mit den Materialverstärkungen zusammenpassen.

Bei Einzelmatten finden Fasern mit einer Dicke von 6 bis 12 Mikrometer Verwendung.

Als Einzelmatten kann eine Kombination aus hintereinander angeordneten Quell- und Fasermattenabschnitten 5, 7 vorgesehen sein, wobei der Verbindungsstoß der einzelnen Quell- und Fasermattenabschnitten Wellenform 11 besitzt.

Die Einzelmatte bzw. die Lagermatte 4 kann vor einer Umwicklung um den Keramikmonolithen 1, 2 zumindest an den erosionsgefährdeten Stellen A imprägniert sein, wobei die Imprägnierung auf der monolithzugewandten Mattenseite mit verdünnten, durch Netzmittel eindringfähig gemachten hitzebeständigen Klebern erfolgt, die zumindest einer der folgenden Produktgruppen zugeordnet sind:
- kolloidale Lösung von in Wasser gelöster Kieselsäure
- Wasserglas
- Alkalisiliconate wie z. B. Kaliummethylsiliconat
- Monoaluminiumphosphatlösung
- Aluminiumchromphosphatlösung.

Beim Imprägnieren wird der Kleber so weit verdünnt, daß sich nur an den Kontaktstellen zwischen den Fasern und gegebenenfalls zwischen den Fasern und dem Glimmer Bindemittel befindet.

Die Lagermatte 4 kann mit dem Keramikmonolith 1, 2 und/oder dem Rohrgehäuse 3 mit einem temperaturbeständigen Mattenkleber verklebt werden, wobei der Mattenkleber auf die Innenseite des Rohrgehäuses 3 und/oder auf den Keramikmonoith 1, 2 aufgetragen und die Lagermatte 4 eingelegt und naß im Rohrgehäuse 3 montiert wird.

Der Mattenkleber gehört zur Produktgruppe des Klebers, der zum Imprägnieren verwendet wird.

Mit besonderem Bezug auf die Ausführungsvariante nach den Figuren 1 und 3 ist eine vierlagige Lagermatte 4 vorgesehen, deren unterste dem Rohrgehäuse 3 zugewandte Lage eine Quellmatte 6 ist, welche für eine niedere Temperatur mit entsprechenden Glimmeranteilen in der Quellmatte so ausgelegt ist, daß bereits bei einer niederen Betriebstemperatur ein hinlängliches Aufblähen der Quellmatte erfolgt.

Der vorgenannten Quellmatte 6 schließt sich eine weitere Quellmatte 5 an, welche für eine höhere Betriebstemperatur mit weniger Glimmeranteilen in der Quellmatte ausgelegt ist.

Innen anschließend an die Quellmatte 5 ist eine Lage eines Keramikgewebes vorgesehen, welches einen Erosionsschutz bildet.

Vorgenannte drei Einzellagen können auch Fasermatten sein, welche für niedere bzw. höhere Betriebstemperaturen entsprechend den Lagen 6 bzw. 5 und für einen Erosionsschutz entsprechend der vorgenannten Lage des Keramikgewebes ausgelegt sind.

Als den Monolithen 1, 2 zugewandte vierte Lage der Lagermatte 4 ist ein Drahtgewebe 21 als Abstützung für die vorgenannten drei Lagen vorgesehen, welches auch ein Keramikgewebe sein kann.

Sämtliche Lagen können miteinander sowie mit dem Rohrgehäuse 3 und/oder den Monolithen 1, 2 mittels Kleber verbunden sein. Für einen verbesserten Halt der Lagen untereinander können die Einzellagen unterschiedliche Faserrichtungen aufweisen.

Hinsichtlich der Konfiguration der vier vorgenannten Einzellagen sei bemerkt, daß das Drahtgewebe 21 deutlich schmaler als die restlichen drei Lagen geschnitten ist.

Die Enden links und rechts der Einzellagen 6, 5 gemäß den Figuren 1 und 3 besitzen Wellenform 11 zwecks Schaffung eines optimalen Stoßes bei einer 360°-Umwicklung wie eingangs beschrieben. Hierbei besitzen die beiden oberen Lagen 5 gleiche wellenförmige Zungen 12 am linken Lagenende und entsprechende wellenförmige Ausschnitte 13 am rechten Lagenende, während die wellenförmige Zunge 12 und der wellenförmige Ausschnitt 13 der Lage 6 umgekehrt an den anderen Enden ausgebildet sind, um bei einer Umwicklung der Lagermatte 4 um den Monolithen eine Überlappung im Stoßbereich der Einzellagen herzustellen, wie dies insbesondere auch der Figur 1 entnommen werden kann.

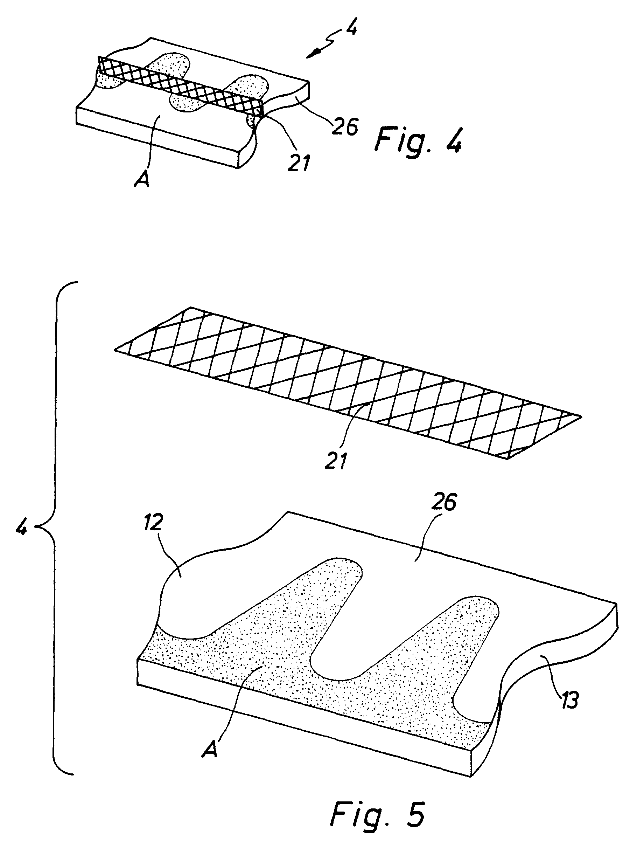

Die Ausführungsvariante einer Lagermatte 4 nach den Figuren 4 und 5 besteht aus zwei Lagen: einer Halterungsmatte 26 mit einem inneren Erosionschutz durch Imprägnierung des gefährdeten Bereiches A mittels Kleber wie zuvor beschrieben, welche eine Quell- oder Fasermatte sein kann, sowie aus einer inneren Abstützung in Form eines Drahtgewebes 21 oder eines Keramikgewebes wie im ersten Ausführungsbeispiel nach den Figuren 1 und 3. Die Halterungsmatte 26 weist endseitig Wellenform 11 wie die oberen beiden Lagen 5 im ersten Ausführungsbeispiel auf.

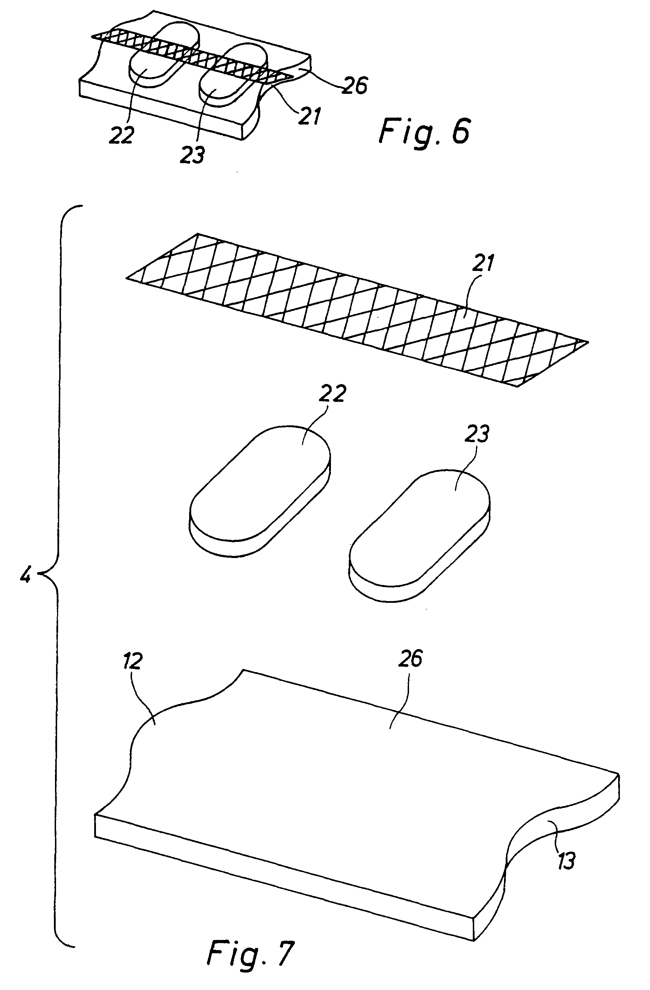

Die dritte Ausführungsvariante einer Lagermatte 4 nach den Figuren 6 und 7 entspricht im wesentlichen derjenigen nach den Figuren 4 und 5. Jedoch ist hier keine Imprägnierung vorgesehen, sondern stattdessen zur Schaffung eines Erosionsschutzes gefährdeter Bereiche A der Halterungsmatte 26 bzw. Quellmatte eine weitere "Zwischenlage" zwischen Drahtgewebe 21 und Halterungsmatte 26 in Form örtlicher Materialverstärkungen 22 und 23 (Fasermatte, Fasergewebe, Geflecht), welche im veranschaulichten Ausführungsbeispiel Ovalform und eine Dicke von ca. 2mm besitzen.

Anstelle der Ovalform kommen auch andere Konfigurationen in Betracht, z.B. eine gerundete "Kleeblattform" eines Einzelblattes nach Figur 17, wobei zwecks Flächenvergrößerung bzw. Vergrößerung des Erosionsschutzbereiches mehrere "Kleeblätter" dicht nebenander angeordnet werden können, dergestalt, daß praktisch keine Zwischenräume entstehen, d.h. größere Flächen abgedeckt werden können, gegebenenfalls eine komplette Zwischenlage von der Größe der Halterungsmatte 26.

Wie der Figur 17 ferner zu entnehmen ist, entsteht bei einer "Kleeblattform" nur ein geringer Verschnitt an teuerem Material. Gleichwohl ist die Wellenform ähnlich der Einzellagen nach Figur 3 mit den damit einhergehenden Vorteilen grundsätzlich hergestellt.

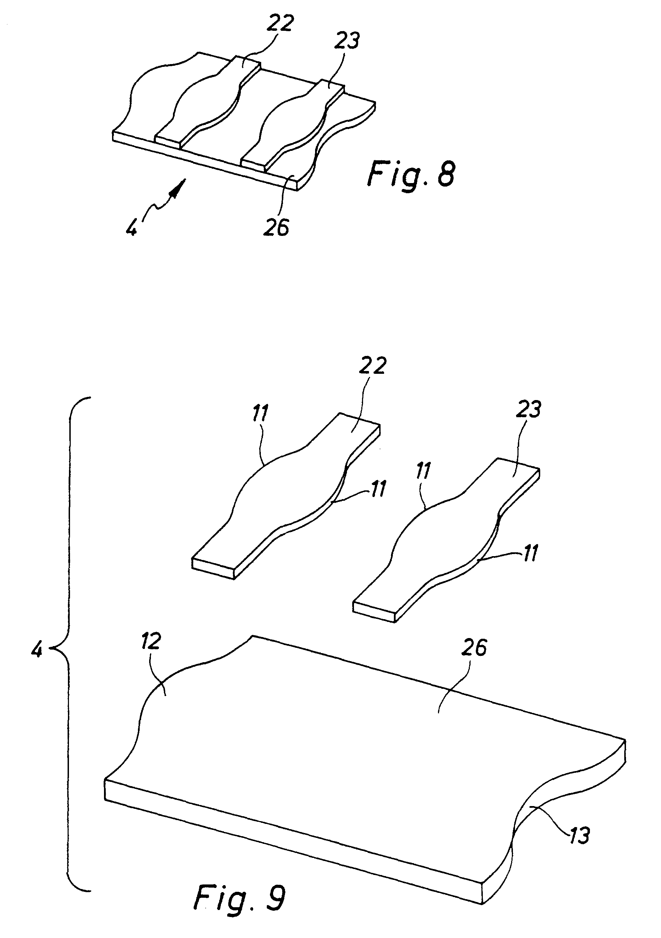

Die vierte Ausführungsvariante einer Lagermatte 4 nach den Figuren 8 und 9 ist zweilagig aufgebaut und besitzt eine Halterungsmatte 26 in Form einer Quellmatte sowie im gefährdeten Bereich A als Erosionsschutz streifenartige Materialverstärkungen 22 und 23 in Wellenform 11. Die Streifen erstrecken sich (im Gegensatz zu den Ovalen 22, 23 nach Figur 7) über die gesamte Breite der Lagermatte 4.

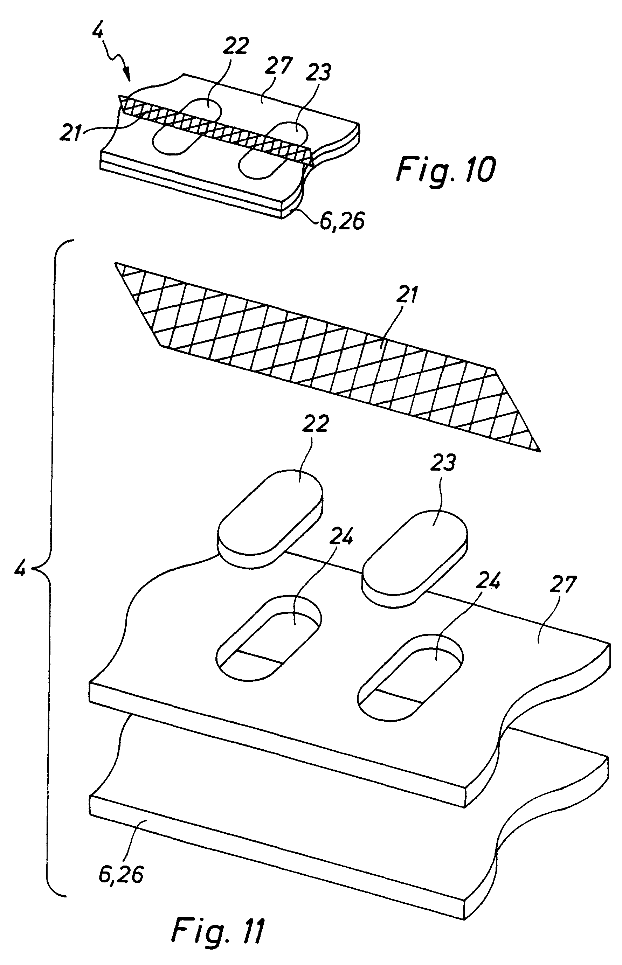

Die fünfte Ausführungsvariante nach den Figuren 10 und 11 entspricht im wesentlichen derjenigen nach den Figuren 6 und 7. Jedoch sind nicht nur örtliche Materialverstärkungen 22, 23 in Ovalform vorgesehen, sondern es wird für die vorgenannten Ovale über die gesamte Mattenerstreckung ein Dicken- und Pressungsausgleich durch eine Zwischenmatte 27 (Quellmatte, Fasermatte) eingerichtet, welche ovalförmige Durchbrüche 24 für ein formschlüssiges Einpassen der Ovale besitzt.

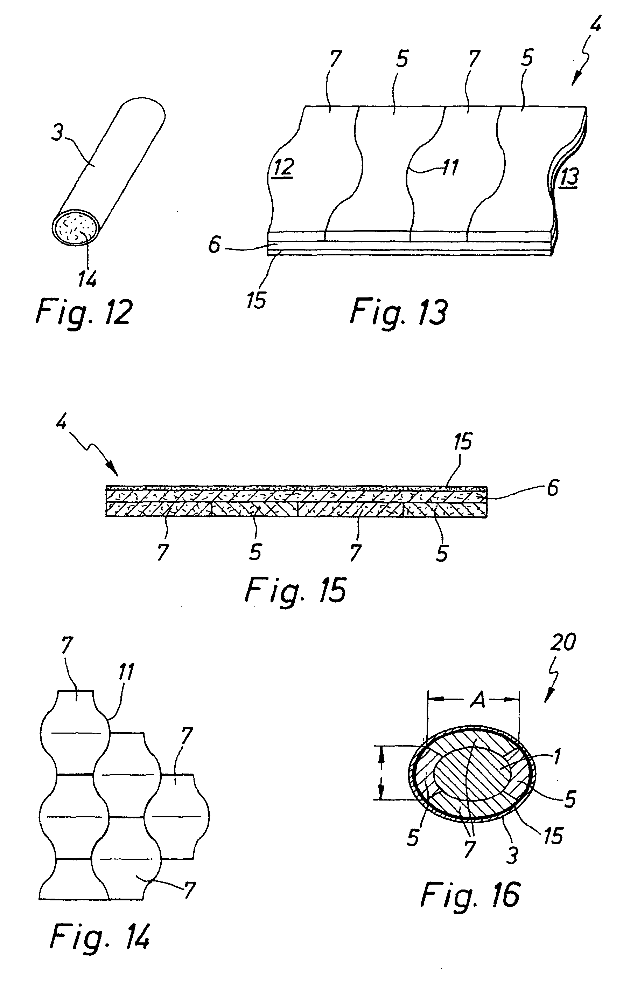

Vor oder bei der Montage einer Abgasanlage können in weiterer Ausgestaltung der Erfindung die Haltekräfte zwischen Lagermatte 4 und Rohrgehäuse 3 durch Formschluß, insbesondere durch Erhöhung der Oberflächenrauhigkeit, gezielt herbeigeführt werden. Insbesondere kann die Erhöhung der Oberflächenrauhigkeit durch Einarbeitung oder Einätzung rauher Flächen erfolgen. Entsprechend zeigt Figur 12 ein ovales Rohrgehäuse 3 mit einer innen aufgerauhte Oberfläche 14 für einen formschlüssigen Halt einer aufzunehmenden Lagermatte 4. Für ein Einschieben der Lagermatte wird ein Gleitmittel als Montagehilfe verwendet.

Fig. 13 veranschaulicht den Aufbau einer mehrlagigen Lagermatte 4. Innen in dichter Nachbarschaft zu den Monolithen 1, 2 ist eine Lage einer Einzelmatte bestehend abwechselnd aus Quellmattenabschnitten 5 für eine Blähen bei hoher Temperatur und erosionsbeständigen Fasermattenabschnitten 7, wobei der verbindende Stoß Wellenform 11 besitzt. Außen in Richtung Innenseite des Rohrgehäuses 3 befindet sich eine Träger-Phenolharzfolie 15 als Klebeschicht. Zwischen Klebeschicht und vorgenannter kombinierter Einzelmatte befindet sich eine Lage einer anderen Quellmatte 6 mit einer Konsistenz an Glimmerbestandteilen, daß ein Blähen bereits bei niedriger Temperatur eintritt. Für eine Montage wird eine vorkonfektionierte Phenolharzklebefolie 15 an der Außenseite der Lagermatte 4 angeordnet und zusammen mit der Lagermatte 4 eingelegt und im Betrieb der Abgasanlage bei Erwärmung außen an der Innenseite des Rohrgehäuses 3 abgebunden.

Wie der Fig. 14 zu entnehmen ist, kann ein Fasermatte 4 mit wellenförmigen Zuschnitt 11 ohne Verschnitt hergestellt werden.

Fig. 15 veranschaulicht einen Querschnitt durch eine mehrlagige Lagermatte 4, während in Fig. 16 die Gesamtanordnung der Abgasanlage nach einer Montage in einem schematischen Querschnitt gezeigt ist.

In Figur 18 ist eine Kraftfahrzeug-Abgasanlage mit einem ovalen Rohrgehäuse 3 gezeigt, in welchem zwei Keramikmonolithen 1, 2 hintereinander angeordnet sind.

Die Keramikmonolithen 1, 2 werden in einer umwickelten Lagermatte 4 gehaltert.

Die Lagermatte 4 gemäß Fig. 18, oben, ist aus Filzfasern aufgebaut, welche schräg zur Axialachse unter einem Winkel α von ca. 30° liegen und endseitig an den Trennflächen 9, 10 verklebt sind.

Die Lagermatte 4 gemäß Fig. 18, unten, ist aus Fasern aufgebaut, welche in Schlingen über die Dicke der Lagermatte verlaufen, wobei die Schlingen im Bereich der Trennflächen 9, 10 verklebt sind.

## Patentansprüche

1. Lagerung zur Halterung und Isolation von Keramikmonolithen (1, 2) in einer Kraftfahrzeug-Abgasanlage, mit einem einen vorzugsweise unrunden Querschnitt aufweisenden Gehäuse (3), und zumindest einem innenliegenden Keramikmonolith (1, 2) entsprechenden Querschnitts, wobei der Keramikmonolith mit einer Lagermatte (4) umwickelt und im Gehäuse (3) gelagert ist, wobei die Lagermatte (4) als Einzelmatte oder mehrlagig zumindest aus zwei Lagen aufgebaut ist, und die Einzelmatte oder zumindest eine Lage der mehrlagigen Lagermatte (4) in Umfangsrichtung eines Keramikmonolithen (1, 2) aus druckbeständigen Quellmattenabschnitten (5) mit Blähglimmer und zwischengeordneten erosionsbeständigen Fasermattenabschnitten (7) ohne Blähglimmer zusammengesetzt ist,
**dadurch gekennzeichnet,**
**daß** die Verbindungsränder zwischen den Quellmattenabschnitten und Fasermattenabschnitten einen ineinander kämmenden Stoß in Wellenform (11) besitzen.

2. Lagerung nach Anspruch 1,
**dadurch gekennzeichnet,**
**daß** die erosionsbeständigen Fasermattenabschnitte (7) wellenförmigen Zungen (12) und die druckbeständigen Quellmattenabschnitte (5) wellenförmigen Ausschnitte (13) besitzen.

3. Lagerung nach Anspruch 1 oder 2,
**dadurch gekennzeichnet,**
**daß** Lagen einer mehrlagigen Lagermatte (4) innen und außen unterschiedliche Quellmatten (5, 6) mit Blähglimmer und/oder Fasermatten (7) ohne Blähglimmer sind.

4. Lagerung nach einem der Ansprüche 1 bis 3,
**dadurch gekennzeichnet,**
**daß** als innere vorzugsweise dem Gehäuse (3) zugewandte Lage der Lagermatte (4) eine Matte aus Keramikfasergewebe vorgesehen ist.

5. Lagerung nach einem der Ansprüche 1 bis 4,
**dadurch gekennzeichnet,**
**daß** in oder an der Einzelmatte örtliche erosionsminimierende Materialverstärkungen (22, 23) ein- oder angebracht sind, wobei die Einzelmatte an der Stelle der Ein- oder Anbringung der Materialverstärkungen (22, 23) Einbuchtungen oder Durchbrüche (24) aufweisen kann, welche formschlüssig mit den Materialverstärkungen zusammenpassen.

6. Lagerung nach einem der Ansprüche 1 bis 5,
**dadurch gekennzeichnet,**
**daß** die Einzelmatte dem Keramikmonolithen (1, 2) zugewandt ist.

7. Lagerung nach einem der Ansprüche 1 bis 6,
**dadurch gekennzeichnet,**
**daß** die Lagermatte (4) zumindest teilweise imprägniert ist, wobei die Imprägnierung auf der monolithzugewandten Mattenseite mit verdünnten, durch Netzmittel eindringfähig gemachten hitzebeständigen Klebern erfolgt, die zumindest einer der folgenden Produktgruppen zugeordnet sind:
- kolloidale Lösung von in Wasser gelöster Kieselsäure
- Wasserglas
- Alkalisiliconate wie z. B. Kaliummethylsiliconat
- Monoaluminiumphosphatlösung
- Aluminiumchromphosphatlösung.

8. Lagerung nach Anspruch 7,
**dadurch gekennzeichnet,**
**daß** der Kleber so weit verdünnt ist, daß sich nur an den Kontaktstellen zwischen den Fasern und gegebenenfalls zwischen den Fasern und dem Blähglimmer Bindemittel befindet.

9. Lagerung nach einem der Ansprüche 1 bis 8,
**dadurch gekennzeichnet,**
**daß** die Lagermatte (4) mit dem Keramikmonolith (1, 2) und/oder Gehäuse (3) mit einem temperaturbeständigen Mattenkleber verklebt ist, wobei der Mattenkleber auf die Innenseite des Gehäuses (3) und/oder auf den Keramikmonolith (1, 2) aufgetragen und die Lagermatte (4) eingelegt und naß im Gehäuse (3) montiert ist.

10. Lagerung nach Anspruch 9,
**dadurch gekennzeichnet,**
**daß** der Mattenkleber zumindest einer der folgenden Produktgruppen zugeordnet ist:
- kolloidale Lösung von in Wasser gelöster Kieselsäure
- Wasserglas
- Alkalisiliconate wie z. B. Kaliummethylsiliconat
- Monoaluminiumphosphatlösung
- Aluminiumchromphosphatlösung.

11. Lagerung nach einem der Ansprüche 1 bis 10,
**dadurch gekennzeichnet,**
**daß** die Lagermatte (4) und/oder das Gehäuse (3) eine rauhe Oberfläche aufweist.

12. Lagerung nach Anspruch 11,
**dadurch gekennzeichnet,**
**daß** die rauhe Oberfläche eingearbeitete oder eingeätzte rauhe Flächen (14) sind.

13. Lagerung nach einem der Ansprüche 1 bis 12,
**dadurch gekennzeichnet,**
**daß** eine vorkonfektionierte Phenolharzklebefolie (15) an der Außenseite der Lagermatte (4) angeordnet ist, welche an der Innenseite des Gehäuses (3) abgebunden ist.

14. Lagerung nach einem der Ansprüche 1 bis 13,
**dadurch gekennzeichnet,**
**daß** die Lagermatte (4) eine scherstabile Fasermatte (7) aufweist.

15. Lagerung nach Anspruch 14,
**dadurch gekennzeichnet,**
**daß** die scherstabile Fasermatte (7) schräge Filzfasern (8) besitzt, welche unter einem flachen Winkel (α) von 5° bis 60° von der Unter- zur Oberseite (9 bzw. 10) der Matte verlaufen und die Filzfaserenden an den Trennflächen bzw. an der Unter- und Oberseite 9, 10) der Matte verklebt sind.

16. Lagerung nach Anspruch 15,
**dadurch gekennzeichnet,**
**daß** die scherstabile Fasermatte (7) Fasern aufweist, welche über die Mattendicke in Schlingen angeordnet sind, wobei die Schlingen an der Ober- und Unterseite (10, 9) der Matte anliegen und verklebt sind.

17. Lagerung nach einem der Ansprüche 1 bis 16,
**dadurch gekennzeichnet**,
die Lagermatte (4) Faserfilze und/oder Gewebematten aufweist, die zumindest eine der nachfolgenden Materialien bzw. Produktgruppen zugeordnet sind:
- geleachtes Glas
- Quarzglas
- Aluminiumoxid
- Mischungen aus Aluminium- und Siliziumoxid
- Anteile von Bor und/oder Zirkon

18. Lagerung nach einem der Ansprüche 1 bis 17,
**dadurch gekennzeichnet,**
**daß** als innere Abstützung der Lagermatte (4) ein Drahtgewebe (21) vorgesehen ist, welches vorzugsweise in Axialerstreckung der Lagerung schmaler geschnitten ist als der Rest der Lagermatte (4).

19. Lagerung nach einem der Ansprüche 1 bis 18,
**dadurch gekennzeichnet,**
**daß** eine Einzelmatte Fasern mit einer Dicke von 6 bis 12 Mikrometer aufweist.

## Claims

1. Bearing for holding and insulating ceramic monoliths (1, 2) in a motor vehicle exhaust system, having a housing (3), which has a preferably non-circular cross section, and at least one inner ceramic monolith (1, 2) of corresponding cross section, a bearing mat (4) being wound around the ceramic monolith and the monolith being mounted in the housing (3), the bearing mat (4) being constructed as an individual mat or in multilayer form, at least comprising two layers, and the individual mat or at least one layer of the multilayer bearing mat (4), in the peripheral direction of a ceramic monolith (1, 2), being composed of pressure-resistant swellable-mat sections (5) comprising expanded mica and intermediate, erosion-resistant fibre-mat sections (7) without expanded mica, **characterized in that** the connecting edges between the swellable-mat sections and fibre-mat sections have an interlocking joint in wave form (11).

2. Bearing according to Claim 1, **characterized in that** the erosion-resistant fibre-mat sections (7) have wave-shaped tongues (12) and the pressure-resistant swellable-mat sections (5) have wave-shaped cutouts (13).

3. Bearing according to Claim 1 or 2, **characterized in that** layers of a multilayer bearing mat (4) on the inside and outside are different swellable mats (5, 6) including expanded mica and/or fibre mats (7) without expanded mica.

4. Bearing according to one of Claims 1 to 3, **characterized in that** a mat comprising woven ceramic fibres is provided as the inner layer, preferably facing the housing (3), of the bearing mat (4).

5. Bearing according to one of Claims 1 to 4, **characterized in that** local erosion-minimizing material reinforcements (22, 23) are introduced into or arranged on the individual mat, it being possible for the individual mat, at the location where the material reinforcements (22, 23) are introduced or arranged, to have indentations or apertures (24) which fit together in a positively-locking manner with the material reinforcements.

6. Bearing according to one of Claims 1 to 5, **characterized in that** the individual mat faces the ceramic monolith (1, 2).

7. Bearing according to one of Claims 1 to 6, **characterized in that** the bearing mat (4) is at least partially impregnated, the impregnation being effected on the side of the mat which faces the monolith with dilute, heat-resistant adhesives which have been made able to penetrate by wetting agents and which belong to at least one of the following groups of products:
- colloidal solution of silica dissolved in water
- water-glass
- alkali metal siliconates, such as for example potassium methyl siliconate
- monoaluminium phosphate solution
- aluminium chromium phosphate solution.

8. Bearing according to Claim 7, **characterized in that** the adhesive is diluted to such an extent that binder is only located at the points of contact between the fibres and, if appropriate, between the fibres and the expanded mica.

9. Bearing according to one of Claims 1 to 8, **characterized in that** the bearing mat (4) is adhesively bonded to the ceramic monolith (1, 2) and/or housing (3) by a temperature-resistant mat adhesive, the mat adhesive being applied to the inner side of the housing (3) and/or to the ceramic monolith (1, 2) and the bearing mat (4) being inserted and mounted in the housing (3) while it is still wet.

10. Bearing according to Claim 9, **characterized in that** the mat adhesive belongs to at least one of the following groups of products:
- colloidal solution of silica dissolved in water
- water-glass
- alkali metal siliconates, such as for example potassium methyl siliconate
- monoaluminium phosphate solution
- aluminium chromium phosphate solution.

11. Bearing according to one of Claims 1 to 10, **characterized in that** the bearing mat (4) and/or the housing (3) has a rough surface.

12. Bearing according to Claim 11, **characterized in that** the rough surface is formed by machined-in or etched-in rough areas (14).

13. Bearing according to one of Claims 1 to 12, **characterized in that** a prefabricated phenolic resin adhesive film (15) is arranged on the outer side of the bearing mat (4) and is bonded to the inner side of the housing (3).

14. Bearing according to one of Claims 1 to 13, **characterized in that** the bearing mat (4) has a shear-stable fibre mat (7).

15. Bearing according to Claim 14, **characterized in that** the shear-stable fibre mat (7) has inclined felt fibres (8) which run at an acute angle (α) of 5° to 60° from the lower side (9) to the upper side (10) of the mat, and the felt-fibre ends are adhesively bonded at the parting faces and/or at the lower and upper side (9, 10) of the mat.

16. Bearing according to Claim 15, **characterized in that** the shear-stable fibre mat (7) includes fibres which are arranged in loops over the mat thickness, the loops bearing against and being adhesively bonded to the upper and lower side (10, 9) of the mat.

17. Bearing according to one of Claims 1 to 16, **characterized in that** the bearing mat (4) includes fibre felts and woven-fabric mats which belong to at least one of the following materials or groups of products:
- leached glass
- quartz glass
- aluminium oxide
- mixtures of aluminium oxide and silicon oxide
- fractions of boron and/or zirconium.

18. Bearing according to one of Claims 1 to 17, **characterized in that** a woven wire fabric (21) is provided as inner support for the bearing mat (4) and is preferably cut to be narrower, in the axial extent of the bearing, than the remainder of the bearing mat (4).

19. Bearing according to one of Claims 1 to 18, **characterized in that** an individual mat includes fibres with a thickness of from 6 to 12 micrometers.

## Revendications

1. Logement pour maintenir et isoler des monolithes céramiques (1, 2) dans un système de gaz d'échappement de véhicule automobile, comportant un boîtier (3) présentant une section transversale de préférence ovale et au moins un monolithe céramique (1, 2) de section transversale correspondante disposé à l'intérieur dudit boîtier (3), le monolithe céramique étant entouré d'une natte de soutien (4) et logé dans le boîtier (3), la natte de soutien (4) étant conformée comme une natte simple ou à plusieurs couches comportant au moins deux couches, et la natte simple ou au moins une couche de la natte de soutien (4) à plusieurs couches étant composée dans le sens périphérique d'un monolithe céramique (1, 2) de segments de natte expansive (5) résistant à la pression comportant du mica expansé et de segments de natte en fibres (7) résistant à l'érosion sans mica expansé disposés entre lesdits segments de natte expansive (5), **caractérisé en ce que** les bords de raccordement entre les segments de natte expansive et les segments de natte en fibres possèdent une jointure de forme ondulée (11) s'emboîtant l'une dans l'autre.

2. Logement selon la revendication 1, **caractérisé en ce que** les segments de natte en fibres (7) résistant à l'érosion possèdent des languettes (12) de forme ondulée et les segments de natte expansive (5) résistant à la pression possèdent des entailles (13) de forme ondulée.

3. Logement selon la revendication 1 ou 2, **caractérisé en ce que** des couches d'une natte de soutien (4) à plusieurs couches sont des nattes expansives (5, 6) intérieures et extérieures différentes comportant du mica expansé et/ou des nattes en fibres (7) sans mica expansé.

4. Logement selon l'une quelconque des revendications 1 à 3, **caractérisé en ce qu'**une natte constituée d'un tissu en fibres céramiques est prévue comme couche intérieure de la natte de soutien (4) tournée de préférence vers le boîtier (3).

5. Logement selon l'une quelconque des revendications 1 à 4, **caractérisé en ce que** des renforts de matière (22, 23) minimisant localement l'érosion sont insérés dans ou appliqués sur la natte simple, la natte simple pouvant présenter des cavités ou des ouvertures (24) aux endroits d'insertion ou d'application des renforts de matière (22, 23), lesquelles s'adaptent par fermeture géométrique aux renforts de matière.

6. Logement selon l'une quelconque des revendications 1 à 5, **caractérisé en ce que** la natte simple est tournée vers le monolithe céramique (1, 2).

7. Logement selon l'une quelconque des revendications 1 à 6, **caractérisé en ce que** la natte de soutien (4) est imprégnée au moins partiellement, l'imprégnation étant réalisée du côté de la natte tourné vers le monolithe au moyen de colles diluées résistant à la chaleur, rendues pénétrantes à l'aide d'un agent mouillant, lesquelles colles appartiennent au moins à un des groupes de produits suivants :
- solution colloïdale d'acide silicique dissous dans de l'eau ;
- verre soluble ;
- siliconates de métal alcalin, comme par exemple du siliconate méthylique de potassium ;
- solution de monophosphate d'aluminium ;
- solution de phosphate de chrome-aluminium.

8. Logement selon la revendication 7, **caractérisé en ce que** la colle est diluée de telle sorte que du liant se trouve uniquement aux endroits de contact entre les fibres et le cas échéant entre les fibres et le mica expansé.

9. Logement selon l'une quelconque des revendications 1 à 8, **caractérisé en ce que** la natte de soutien (4) est collée sur le monolithe céramique (1, 2) et/ou le boîtier (3) au moyen d'une colle de la natte résistant à la chaleur, la colle de la natte étant appliquée du côté intérieur du boîtier (3) et/ou sur le monolithe céramique (1, 2) et la natte de soutien (4) étant insérée et montée humide dans le boîtier (3).

10. Logement selon la revendication 9, **caractérisé en ce que** la colle de la natte appartient au moins à un des groupes de produits suivants :
- solution colloïdale d'acide silicique dissous dans de l'eau ;
- verre soluble ;
- siliconates de métal alcalin, comme par exemple du siliconate méthylique de potassium ;
- solution de monophosphate d'aluminium ;
- solution de phosphate de chrome-aluminium.

11. Logement selon l'une quelconque des revendications 1 à 10, **caractérisé en ce que** la natte de soutien (4) et/ou le boîtier (3) présente(nt) une surface rugueuse.

12. Logement selon la revendication 11, **caractérisé en ce que** les surfaces rugueuses sont des surfaces rugueuses (14) réalisées par voie mécanique ou chimique.

13. Logement selon l'une quelconque des revendications 1 à 12, **caractérisé en ce qu'**une feuille de collage préconfectionnée en résine phénolique (15) est disposée du côté extérieur de la natte de soutien (4), la prise de la feuille s'étant effectuée du côté intérieur du boîtier (3).

14. Logement selon l'une quelconque des revendications 1 à 13, **caractérisé en ce que** la natte de soutien (4) présente une natte en fibres (7) stable au cisaillement.

15. Logement selon la revendication 14, **caractérisé en ce que** la natte en fibres (7) stable au cisaillement possède des fibres de feutre en biais (8), lesquelles s'étendent depuis le côté inférieur jusqu'au côté supérieur (9, 10) de la natte en formant un angle plat (α) de 5° à 60° et **en ce que** les extrémités des fibres de feutre sont collées aux surfaces de séparation respectivement du côté inférieur et du côté supérieur (9, 10) de la natte.

16. Logement selon la revendication 15, **caractérisé en ce que** la natte en fibres (7) stable au cisaillement présente des fibres, lesquelles sont disposées en boucles sur l'épaisseur de la natte, les boucles étant adjacentes et collées du côté supérieur et du côté inférieur (10, 9) de la natte.

17. Logement selon l'une quelconque des revendications 1 à 16, **caractérisé en ce que** la natte de soutien (4) présente du feutre en fibres et/ou des nattes tissées, lesquels appartiennent au moins à un des groupes de matières ou de produits suivants :
- verre lixivié
- verre quartzeux
- oxyde d'aluminium
- mélanges d'oxyde d'aluminium et d'oxyde de silicium
- proportions de bore et/ou de zircon.

18. Logement selon l'une quelconque des revendications 1 à 17, **caractérisé en ce qu'**il est prévu comme support intérieur de la natte de soutien (4) un tissu métallique (21), lequel est coupé dans le sens axial du logement de préférence de manière plus étroite que le reste de la natte de soutien (4).

19. Logement selon l'une quelconque des revendications 1 à 18, **caractérisé en ce qu'**une natte simple présente des fibres d'une épaisseur de 6 à 12 micromètres.
